# EUROPEAN PATENT APPLICATION

(11) **EP 0 899 893 A1**
(43) Date of publication of application: **03.03.1999**
(21) Application number: 97306694.7
(22) Date of filing: 01.09.1997
(51) Int. Cl.: H04B 1/707

(54) **Spread spectrum communications receiver**

(71) Applicant: KABUSHIKI KAISHA TOSHIBA, Kawasaki-shi, Kanagawa-ken 210-8572 (JP)
(72) Inventor: Nagata, Minoru, 1-1 Shibaura 1-chome,Minato-ku Tokyo 105 (JP); Horiguchi, Yoshinori, 1-1 Shibaura 1-chome,Minato-ku Tokyo 105 (JP)
(74) Representative: O'Connell, David Christopher

(57) **Abstract**

A spread spectrum communications receiver to receive the signal which is processed by spread spectrum modulation and converted to a higher frequency constructed to commonly use a local oscillator (13) which generates a signal for executing the frequency conversion from the received signal band to the baseband signal frequency and a local oscillator (13) which generates signals to be supplied to spectrum despreader (21,22) which execute the spectrum despreading on the received signal. As a result, the receiver scale can be reduced accordingly and a small and inexpensive spread spectrum communications receiver can be realized.

## Description

The present invention relates to a communications system, and more particularly, to a spread spectrum communications receiver.

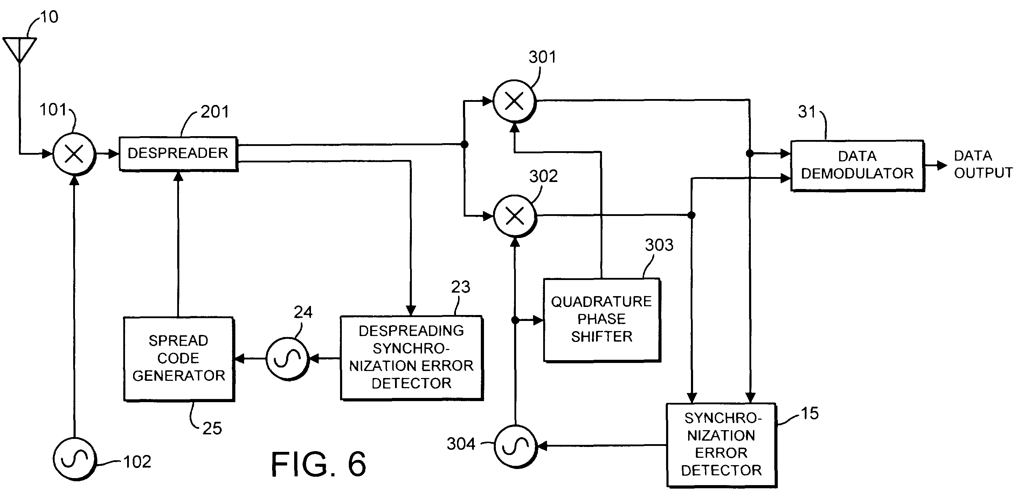

Referring now to FIGURE 6, a conventional spread spectrum communications receiver will be briefly described hereinafter. As shown in FIGURE 6, the conventional receiver generally comprises an antenna 10, a frequency mixer 101, a first local oscillator 102, a spectrum despreader 201, a spectrum despreading synchronization error detector 23, a clock generator 24, a spread code generator 25, frequency mixers 301 and 302, a quadrature phase shifter 303, a second local oscillator 304, a synchronization error detector 15 and a data demodulator 31.

The antenna 10 receives a transmission signal which was processed a spread spectrum modulation and then shifted to a higher frequency band than its original frequency band in a transmitter (not shown). The received signal is introduced into the frequency mixer 101 and therein converted to a lower frequency band using a local frequency generated from the first local oscillator 102. The lower frequency band signal is processed a spectrum despreading in the spectrum despreader 201 using a spread code generated from the spread code generator 25 so that the original signal processed with the spread spectrum modulation at the transmitting side is restored.

Thereafter, the restored original is detected by a detector comprising the frequency mixers 301 and 302, the quadrature phase shifter 303 and the local oscillator 304. Thus the original transmission signal is restored by the data demodulator 31. Further, in order to synchronize the second local frequency generated from the second local oscillator 304 and the outputs of the frequency mixers 301 and 302 with the signal supplied from the spectrum despreader 201 to the frequency mixers 301 and 302, the synchronization error is detected in the synchronization error detector 15 and the phase of the second local frequency generated from the second local oscillator 304 is adjusted.

As described above, in a conventional spread spectrum communications receiver, the frequency of a received signal is once converted and the spectrum despreading is processed and then, received data is obtained after executing the synchronous detection.

However, a conventional spread spectrum communications receiver had such a defect that it is not possible to downsize a receiver even when a direct detection system is adopted, that is used for downsizing a receiver by reducing the number of local oscillators, largely contributing to the downsizing of an ordinary receiver which does not carry out the spread spectrum communications system.

In other words, in a conventional spread spectrum communications receiver, a received signal is firstly shifted its frequency band. Then the received signal is processed with the spectrum despreading. And then data is demodulated from the received signal through the detector. Accordingly, the received signal undergoes twice the frequency mixings, i.e., the one prior the spectrum despreading and the other during the synchronous detection after the spectrum despreading. Therefore, even when a direct detection system is adopted in this structure, the spectrum despreading and the synchronous detection are still required the frequency band shifting.

Therefore, even when the received signal is directly converted to a baseband signal by the frequency mixing operation in the frequency mixer 101, thus the resulted baseband signal only requiring a synchronous detection following a quasi-synchronizied state the spectrum despreading in the spectrum despreader 201, the conventional receiver still requires a synchronization detector comprising the frequency mixers 301, 302, the quadrature phase shifter 303 and the local oscillator 304. Therefore, the number of local oscillators which makes a major key point for downsizing the receiver cannot be reduced. Thus, the direct detection system, if adopted, could not contribute to downsize the receivers.

As described above, a conventional spread spectrum communications receiver has such a defect that it could not reduce the size and the cost of receivers, due to that, even using a direct detection system capable of reducing the number of local oscillators thus normally effective for downsizing the ordinal receiver, it can not reduce the number of local oscillators.

It is, therefore, an object of the present invention to provides a small in size of and low in cost of spread spectrum communications receiver.

In order to achieve the above object, a spread spectrum communications receiver according to one aspect of the present invention includes, means for receiving a transmission signal which is processed the spread spectrum modulation and converted to a higher frequency band is received, a frequency mixer for converting the frequency band of the received signal to another frequency band of the original signal using a local frequency generated from the local oscillator, a spectrum despreader for storing signals by despreading the received signal, means for suppressing the change of the phase of the restored signal by adjusting the local frequency of local oscillators according to the phase information of the restored signal.

According to the above construction, it is possible to share one local oscillator for both of the frequency mixer for converting frequency band of the received signal and the synchronous detector. Therefore, the aspect of the present invention is able to reduce the number of local oscillators which results an increase of the size of a receiver. Or the aspect of the present invention is able to reduce the size of the receiver and also able to provide receivers with a small size and a low.

Additional objects and advantages of the present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a block diagram illustrating a spread spectrum communications receiver according to a first embodiment of the present invention;
FIGURES 2a through 2e are graphs showing spectrums of signals on major portions in FIGURE 1;
FIGURE 3 is a block diagram illustrating a spread spectrum communications receiver according to a second embodiment of the present invention;
FIGURE 4 is a block diagram illustrating a spread spectrum communications receiver according to a third embodiment of the present invention;
FIGURE 5 is a block diagram illustrating a spread spectrum communications receiver according to a fourth embodiment of the present invention; and
FIGURE 6 is a block diagram a conventional spread spectrum communications receiver.

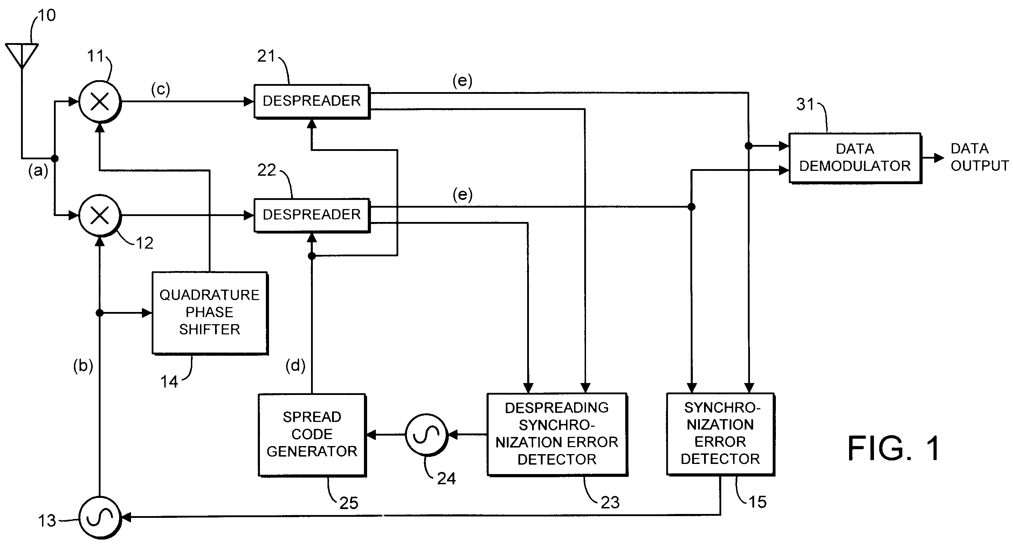

The present invention will be described in detail with reference to the FIGURES 1 through 5.

FIGURE 1 shows a first embodiment of the spread spectrum communications receiver according to the present invention. As shown in FIGURE 1, the receiver comprises an antenna 10, frequency mixers 11 and 12, a local oscillator 13, a quadrature phase shifter 14, a synchronization error detector 15, spectrum despreaders 21 and 22, a spectrum despreading synchronization error detector 23, a clock generator 24, a spread code generator 25 and a data demodulator 31. In such a construction, a set of the frequency mixers 11 and 12, the local oscillator 13, the quadrature phase shifter 14 and the synchronization error detector 15 constructs a synchronous detection loop. And then the synchronous detection loop further includes a spectrum despreading loop comprising the spectrum despreaders 21 and 22, the spectrum despreading synchronization error detector 23, the clock generator 24 and the spread code generator 25.

Now, the operation of the receiver illustrated in FIGURE 1 will be described. The antenna 10 receives a transmission signal which was processed a spread spectrum modulation and then shifted to a higher frequency band than its original frequency band in a transmitter (not shown). The received signal is introduced into the frequency mixers 11 and 12 and therein converted to a baseband signal using a local frequency generated from the local oscillator 13 and its quadrature phase signal through the quadrature phase shifter 14. The baseband signal is processed a spectrum despreading in the spectrum despreaders 21 and 22 using the spread code generated from the spread code generator 25. To synchronize with the received signal to be supplied into the frequency mixers 11 and 12, a synchronization error is detected by the synchronization error detector 15 using the outputs of the spectrum despreaders 21 and 22. The detected synchronization error is then supplied to the local oscillator 13 for adjusting the phase of the local frequency generated therein.

According to the above structure, synchronous detection data are provided on the outputs of the spectrum despreaders 21 and 22. The synchronous detection data are then supplied to the data demodulator 31 and wherein the original transmission signal is restored by the data demodulator 31.

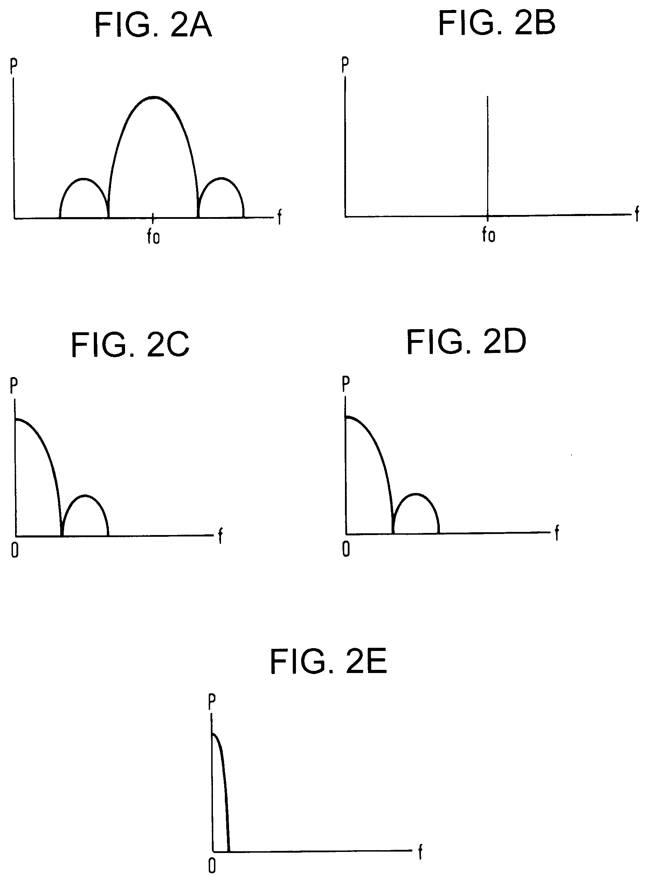

Referring now to FIGURES 2a through 2e, the operation of the receiver, as shown in FIGURE 1, will be explained in detail. FIGURES 2a through 2e respectively illustrate the signal spectrums at circuit portions (a) through (e) in the receiver.

FIGURE 2a shows a spectrum of the received signal at the antenna 10. The received signal has been processed the spread spectrum modulation and then converted to a radio transmission carrier frequency band higher than its signal frequency band, before its transmission. The received signal 2a has a spectrum spreading around the center at the carrier frequency Fo. FIGURE 2b shows a spectrum of the local frequency generated from the local oscillator 13. The local frequency 2b has the same frequency as the carrier frequency Fo of the transmission signal. FIGURE 2c shows a spectrum of a baseband signal output from the frequency mixers 11 and 12. The baseband signal has a spread spectrum characteristics as processed in the transmitter side. FIGURE 2d shows a spectrum of a spread code generated from the spread code generator 25 for the spectrum despreading operation. FIGURE 2e shows the spectrum of the baseband signal, as shown in FIGURE 2c, after processed the spectrum despreading at the spectrum despreaders 21 and 22, using the spread code 2d generated from the spread code generator 25, as shown in FIGURE 2d.

As shown in FIGURES 2a through 2e, it will be understood that the first embodiment of the spread spectrum communications receiver can securely carry out the conversion of the high frequency band received signal to the baseband signal, and the spectrum despreading of the baseband signal for restoring the original signal before the spread spectrum modulation at the transmitter side.

Further, the first embodiment of the spread spectrum communications receiver can carry out simultaneously the baseband signal conversion and the synchronous detection, like normal receivers employing a direct detection technique but not the spread spectrum technique. Therefore, the first embodiment of the receiver is possible to share a single set of a local oscillator, e.g., represented by the local oscillator 13, and a pair of frequency mixers, e.g., represented by the frequency mixers 11 and 12 for generating a local frequency or a reference signal to be used for the baseband signal conversion and for the synchronous detection. Therefore, this first embodiment of the receiver is possible to downsize the receiver by reducing the number of local oscillators which has conventionally caused the increase of the size of the receiver. Thus, this first embodiment can provide spread spectrum communications receivers with the reduced size and the low cost.

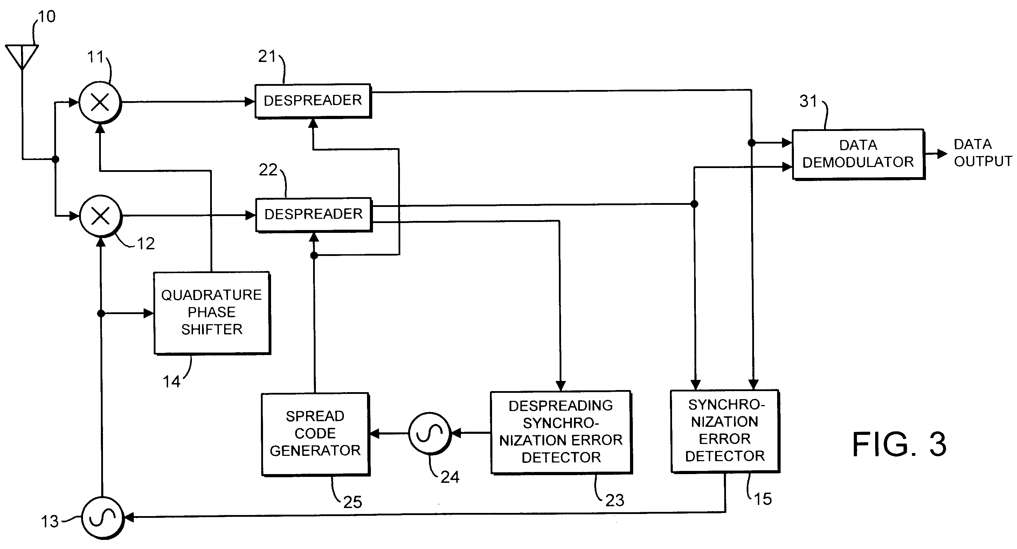

FIGURE 3 shows a second embodiment of the spread spectrum communications receiver according to the present invention. In FIGURE 3, the same reference numerals will be assigned for the elements which perform the same functions as those shown in FIGURE 1. As shown in FIGURE 3, the receiver comprises an antenna 10, frequency mixers 11 and 12, a local oscillator 13, a quadrature phase shifter 14, a synchronization error detector 15, spectrum despreaders 21 and 22, a spectrum despreading synchronization error detector 23, a clock generator 24, a spread code generator 25 and a data demodulator 31. In such a construction, a set of the frequency mixers 11 and 12, the local oscillator 13, the quadrature phase shifter 14 and the synchronization error detector 15 constructs a synchronous detection loop. And then the synchronous detection loop further includes a spectrum despreading loop comprising the spectrum despreaders 21 and 22, the spectrum despreading synchronization error detector 23, the clock generator 24 and the spread code generator 25.

The antenna 10 receives a transmission signal which was processed a spread spectrum modulation and then shifted to a higher frequency band than its original frequency band in a transmitter (not shown). The received signal is introduced into the frequency mixers 11 and 12 and therein converted to a baseband signal using a local frequency generated from the local oscillator 13 and its quadrature phase signal through the quadrature phase shifter 14. The baseband signal is processed a spectrum despreading in the spectrum despreaders 21 and 22 using the spread code generated from the spread code generator 25. To synchronize with the received signal to be supplied into the frequency mixers 11 and 12, a synchronization error is detected by the synchronization error detector 15 using the outputs of the spectrum despreaders 21 and 22. The detected synchronization error is then supplied to the local oscillator 13 for adjusting the phase of the local frequency generated therein.

According to the above structure, synchronous detection data are provided on the outputs of the spectrum despreaders 21 and 22. The synchronous detection data are then supplied to the data demodulator 31 and wherein the original transmission signal is restored by the data demodulator 31.

Further, in general spread spectrum communications systems, I-axis and Q-axis phase carriers of the spread spectrum transmission signal are generally processed the spread spectrum modulation with the same type and the same phase spread codes generated from one spread spectrum code. So, it is apparent that spectrum despreading synchronization errors in both of the I-axis and Q-axis phase carriers of the received signal become always the same with each other according to a synchronous tracking operation surely implemented in the spectrum despreading operation for the received signal. Therefore, the spectrum despreading synchronization error detector 23 is not needed to use both outputs of the spectrum despreaders 21 and 22 for the I-axis and the Q-axis phase carriers but it is sufficient to use either one of the outputs of the spectrum despreaders 21 and 22.

So, here it assumed that a transmission signal with the I-axis and Q-axis phase carriers which are processed the spread spectrum modulation by the same type and the same phase spread codes generated from one spread code generator is received. Then it is possible to execute the synchronous tracking of the spectrum despreading for the I-axis and the Q-axis phase carriers by using only the output of the spectrum despreader 22. The structure of the spectrum despreading synchronization error detector 23 is thus simplified in comparison with the one in the first embodiment, as shown in FIGURE 1, by that the number of their inputs has been reduced.

Thus, the second embodiment of the spread spectrum communications receiver, as shown in FIGURE 3, can carry out simultaneously the baseband signal conversion and the synchronous detection, like normal receivers employing a direct detection technique but not the spread spectrum technique. Therefore, the second embodiment of the receiver is possible to share a single set of a local oscillator, e.g., represented by the local oscillator 13, and a pair of frequency mixers, e.g., represented by the frequency mixers 11 and 12 for generating a local frequency or a reference signal to be used for the baseband signal conversion and for the synchronous detection. Therefore, this second embodiment of the receiver is possible to downsize the receiver by reducing the number of local oscillators which has conventionally caused the increase of the size of the receiver. Thus, this second embodiment can provide spread spectrum communications eceivers with the reduced size and the low cost.

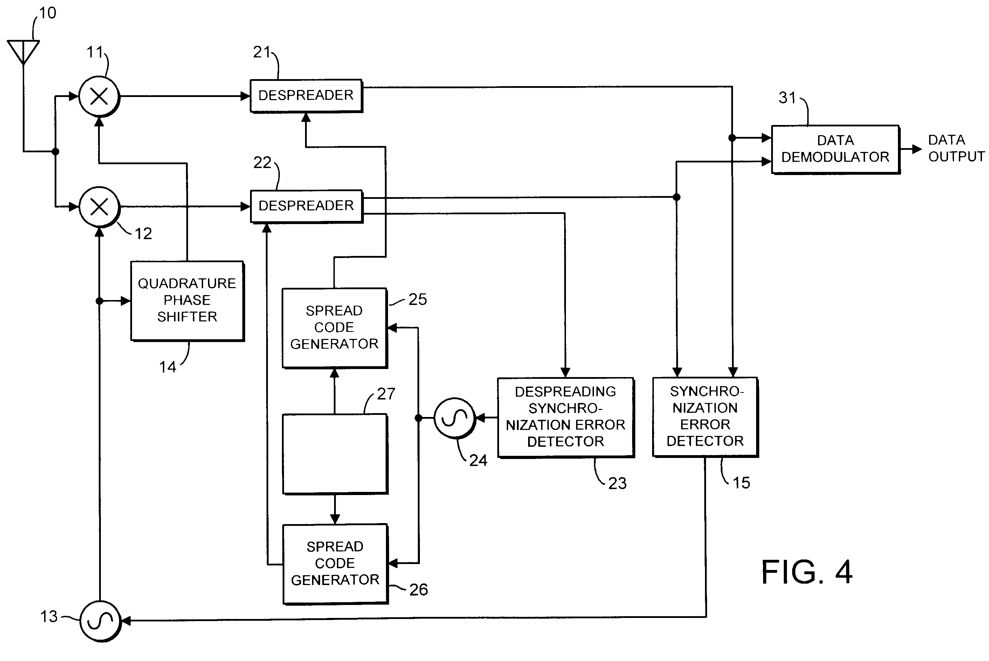

FIGURE 4 shows a third embodiment of the spread spectrum communications receiver according to the present invention. This third embodiment is addressed to a spread spectrum communications system wherein different type of spread codes are utilized for the spread spectrum modulation of the I-axis and the Q-axis phase carriers, in order to enhance the secrecy of the communication system. In FIGURE 4, the same reference numerals will be assigned for the elements which perform the same functions as those shown in FIGURE 1.

As shown in FIGURE 4, the receiver comprises an antenna 10, frequency mixers 11 and 12, a local oscillator 13, a quadrature phase shifter 14, a synchronization error detector 15, spectrum despreaders 21 and 22, a spectrum despreading synchronization error detector 23, a clock generator 24, spread code generators 25 and 26, a phase synchronizer 27 and a data demodulator 31. In such a construction, a set of the frequency mixers 11 and 12, the local oscillator 13, the quadrature phase shifter 14 and the synchronization error detector 15 constructs a synchronous detection loop. And then the synchronous detection loop further includes a spectrum despreading loop comprising the spectrum despreaders 21 and 22, the spectrum despreading synchronization error detector 23, the clock generator 24 and the spread code generators 25 and 26, and the phase synchronizer 27.

In this third embodiment of the receiver, the antenna 10 receives a transmission signal which was processed a spread spectrum modulation and then shifted to a higher frequency band than its original frequency band in a transmitter (not shown). The received signal is introduced into the frequency mixers 11 and 12 and therein converted to a baseband signal using a local frequency generated from the local oscillator 13 and its quadrature phase signal through the quadrature phase shifter 14. The baseband signal is processed a spectrum despreading in the spectrum despreaders 21 and 22 using the spread codes generated from the spread code generators 25 and 26. At this time, a phase difference between the spread codes generated from the spread code generators 25 and 26 is fixed at a prescribed value under the control of the phase synchronizer 27. To synchronize with the received signal to be supplied into the frequency mixers 11 and 12, a synchronization error is detected by the synchronization error detector 15 using the outputs of the spectrum despreaders 21 and 22. The detected synchronization error is then supplied to the local oscillator 13 for adjusting the phase of the local frequency generated therein.

According to the above structure, synchronous detection data are provided on the outputs of the spectrum despreaders 21 and 22. The synchronous detection data are then supplied to the data demodulator 31 and wherein the original transmission signal is restored by the data demodulator 31.

Even in the third embodiment of the spread spectrum communications system wherein different type of spread codes are utilized for the spread spectrum modulation of the I-axis and the Q-axis phase carriers in order to enhance the secrecy of the communication system, it is apparent that spectrum despreading synchronization errors in both of the I-axis and Q-axis phase carriers of the received signal become always the same with each other, according to a synchronous tracking operation surely implemented in the spectrum despreading operation for the received signal, when the spread codes have the same chip rate and the same chip period. Therefore, the spectrum despreading synchronization error detector 23 is not needed to use both outputs of the spectrum despreaders 21 and 22 for the I-axis and the Q-axis phase carriers but it is sufficient to use either one of the outputs of the spectrum despreaders 21 and 22.

So, here it assumed that a spread spectrum transmission signal with the I-axis and Q-axis phase carriers processed by different type of spread codes but having the same chip rate and the same chip period is received. Then the third embodiment of the spread spectrum communications receiver, as shown in FIGURE 4 is able to execute the synchronous tracking of the spectrum despreading for the I-axis and the Q-axis phase carriers by using only the output of the spectrum despreader 22.

Further, the phase relationship between the different type of spread codes which are used for the spectrum despreading the I-axis and Q-axis phase carriers can be easily adjusted by controlling the spread code generators 25 and 26 with the phase synchronizer 27, in the case of that the I-axis and Q-axis phase carriers having the same chip rate and the same chip period. Thus, the third embodiment can provide spread spectrum communications receivers with the enhanced secrecy of communication at the cost of simply adding the spread code generators 25 and 26 with the phase synchronizer 27.

Thus, the third embodiment of the spread spectrum communications receiver can carry out simultaneously the baseband signal conversion and the synchronous detection, like normal receivers employing a direct detection technique but not the spread spectrum technique. Therefore, the third embodiment of the receiver is possible to share a single set of a local oscillator, e.g., represented by the local oscillator 13, and a pair of frequency mixers, e.g., represented by the frequency mixers 11 and 12 for generating a local frequency or a reference signal to be used for the baseband signal conversion and for the synchronous detection. Therefore, this third embodiment of the receiver is possible to downsize the receiver by reducing the number of local oscillators which has conventionally caused the increase of the size of the receiver. Thus, this third embodiment can provide spread spectrum communications receivers with the reduced size and the low cost.

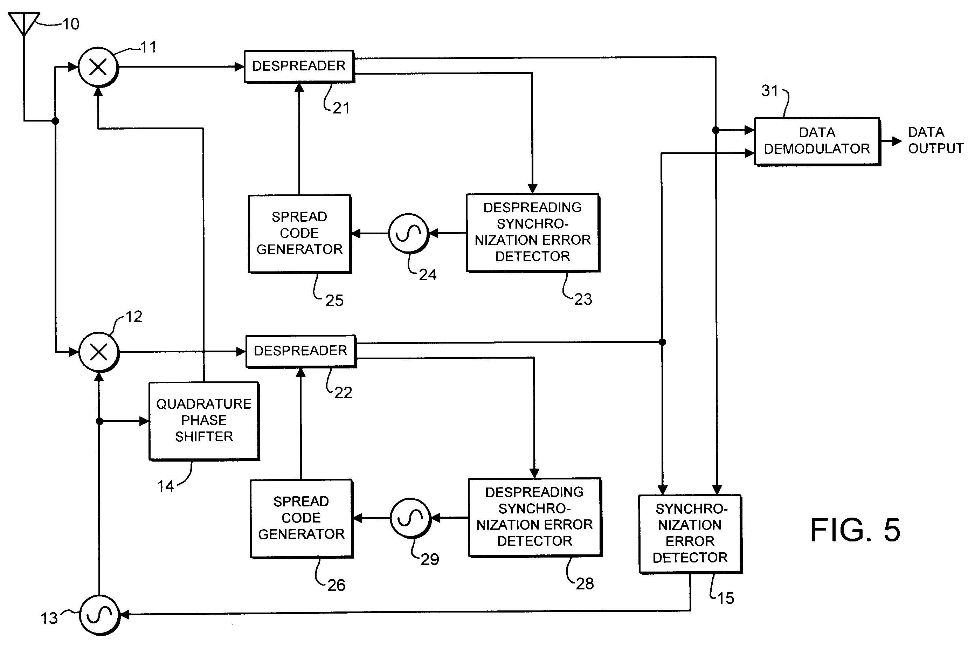

Referring now to FIGURE 5, a fourth embodiment of the spread spectrum communications receiver according to the present invention will be described below. This fourth embodiment is also addressed to a spread spectrum communications system wherein different type of spread codes are utilized for the spread spectrum modulation of the I-axis and the Q-axis phase carriers, in order to enhance the secrecy of the communication system. To further enhance the communication secrecy, this fourth embodiment is also addressed to a spread spectrum communications system wherein not only different type of spread codes but also different chip rates and chip periods are utilized for the spread spectrum modulation of the I-axis and the Q-axis phase carriers.

In FIGURE 5, the same reference numerals will be assigned for the elements which perform the same functions as those shown in FIGURE 1. As shown in FIGURE 5, the receiver comprises an antenna 10, frequency mixers 11 and 12, a local oscillator 13, a quadrature phase shifter 14, a synchronization error detector 15, spectrum despreaders 21 and 22, spectrum despreading synchronization error detectors 23 and 28, clock generators 24 and 29, spread code generators 25 and 26, and a data demodulator 31.

In such a construction, a set of the frequency mixers 11 and 12, the local oscillator 13, the quadrature phase shifter 14 and the synchronization error detector 15 constructs a synchronous detection loop. And then the synchronous detection loop further includes a pair of spectrum despreading loops of the one comprising the spectrum despreader 21, the spectrum despreading synchronization error detector 23, the clock generator 24 and the spread code generator 25 and the other comprising the spectrum despreader 22, the spectrum despreading synchronization error detector 28, the clock generator 29 the spread code generator 26.

In this fourth embodiment of the receiver, the antenna 10 receives a transmission signal which was processed a spread spectrum modulation and then shifted to a higher frequency band than its original frequency band in a transmitter (not shown). The received signal is introduced into the frequency mixers 11 and 12 and therein converted to a baseband signal using a local frequency generated from the local oscillator 13 and its quadrature phase signal through the quadrature phase shifter 14. The baseband signal is processed a spectrum despreading in the spectrum despreaders 21 and 22 using the spread codes generated from the spread code generators 25 and 26.

To synchronize with the received signal to be supplied into the frequency mixers 11 and 12, synchronization errors are detected by the synchronization error detector 15 using the outputs of the spectrum despreaders 21 and 22. The detected synchronization error is then supplied to the local oscillator 13 for adjusting the phase of the local frequency generated therein. According to the above structure, synchronous detection data are provided on the outputs of the spectrum despreaders 21 and 22. The synchronous detection data are then supplied to the data demodulator 31 and wherein the original transmission signal is restored by the data demodulator 31.

In the fourth embodiment of the spread spectrum communications system wherein not only the different type of spread codes but also the different chip rate and the different chip period are utilized for the spread spectrum modulation of the I-axis and the Q-axis phase carriers in order to further enhance the secrecy of the communication system, it is required that the spectrum despreader 22 associated with the I-axis baseband signal and the spectrum despreader 21 associated with the Q-axis baseband signal are separately carried out the spectrum despreading during the synchronous tracking operation.

The fourth embodiment of the spread spectrum communications receiver according to the present invention, as shown in FIGURE 5, has a construction capable of separately carrying out the spectrum despreadings of the I-axis baseband signal the Q-axis baseband signal. That is, the receiver is provided with the spectrum despreading and synchronous tracking loop comprising the spectrum despreader 21, the spectrum despreading synchronization error detector 23, the clock generator 24 and the spread code generator 25 and the other spectrum despreading and synchronous tracking loop comprising the spectrum despreader 22, the spectrum despreading synchronization error detector 28, the clock generator 29 and the spread code generator 26. This fourth embodiment can thus provide a spread spectrum communications receiver capable of particularly enhancing the communication secrecy in the spread spectrum communication by using the different types of spread codes for the I-axis and the Q-axis baseband signals and the different chip rate and the different code length.

Thus, the fourth embodiment of the spread spectrum communications receiver, as shown in FIGURE 5, can carry out simultaneously the baseband signal conversion and the synchronous detection, like normal receivers employing a direct detection technique but not the spread spectrum technique. Therefore, the fourth embodiment of the receiver is possible to share a single set of a local oscillator, e.g., represented by the local oscillator 13, and a pair of frequency mixers, e.g., represented by the frequency mixers 11 and 12 for generating a local frequency or a reference signal to be used for the baseband signal conversion and for the synchronous detection. Therefore, this first embodiment of the receiver is possible to downsize the receiver by reducing the number of local oscillators which has conventionally caused the increase of the size of the receiver. Thus, this first embodiment can provide spread spectrum communications receivers with the reduced size and the low cost.

As described above, according to the spread spectrum communications receiver of the present invention, it is possible to share one local oscillator for both of the frequency mixer for converting frequency band of the received signal and the synchronous detector. Therefore, the receiver of the present invention is able to reduce the number of local oscillators which results an increase of the size of a receiver. Or the aspect of the present invention is able to reduce the size of the receiver.

As described above, the present invention can provide an extremely preferable spread spectrum communications receiver.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present inventior without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A spread spectrum communications receiver characterized in that it receives a signal which is processed the spread spectrum modulation and converted to a higher frequency band, converts the received signal to the original frequency band based on a local frequency generated from a local oscillator and restores the signal by executing the spectrum despreading;
controls the local oscillator based on the phase information extracted from the restored signal; and
by changing the local frequency generated from the local oscillator, controls the restored signal so that its phase is kept unchanged.

2. A spread spectrum communications receiver comprising:
a frequency mixer to receive a signal which is processed the spread spectrum modulation and converted to a high frequency band, converts the received signal to the original signal frequency band based on a local frequency generated from a local oscillator;
a spectrum despreader to execute the spectrum despreading on the output of the frequency mixer and restore the received signal to the original signal band;
a phase error detector to output the phase error information of the received signal and a local frequency generated from the local oscillator from the output of the spectrum despreader; and
a controller to control the restored signal so that the phase of the original signal is kept unchanged by changing the frequency of the local frequency generated from the local oscillator by supplying the phase error information detected by the phase error detector to the local oscillator.

3. A spread spectrum communications receiver characterized in that it receives a signal which is processed the spread spectrum modulation and converted to a higher frequency band, and based on two local frequencies generated from the local oscillators in the same frequency and different phases which are differentiated by 90 degree each other, converts the signal to the original frequency band, restores the received signal to the original signal by executing the spectrum despreading, extracts the phase information of the restored signal and controls the signal so that the phase of the restored signal is kept unchanged by changing the frequency of the local frequency generated from the local oscillator by controlling the local oscillator based on the phase information.

4. A spread spectrum communications receiver characterized in that it is equipped with a first and a second spectrum despreaders for receiving signals which are processed the spread spectrum modulation and converted to a higher frequency band and converts the received signals to the original signal frequency bands, respectively based on the first and the second local frequencies in the same frequency but differentiated their phases by 90 degree each other, which are generated from the local oscillator from the received signals;
a delay locked loop to synchronize the received signals with the spread code and the spectrum despreading code output from the spread code generator establishes the synchronization based on one of two types of received signals which are converted to the original signal frequency band according to the first and the second local frequencies;
by supplying the spectrum despreading codes to the first and the second spectrum despreaders, executes the spectrum despreading on two types of the received signals, respectively based on the first and the second local frequencies and extracts the phase information of the restored original signals; and
by controlling the signal controller based on the extracted phase information by changing the frequency of the local frequency generated from the local oscillator so that the phase of the restored original signal is kept unchanged.

5. A spread spectrum communications receiver as claimed in claim 4, wherein the spread codes supplied to the first and the second spectrum despreaders are the same code.

6. A spread spectrum communications receiver characterized in that it is equipped with a first and a second spectrum despreaders for receiving signals which are processed the spread spectrum modulation and converted to a higher frequency band, converts the received signals to the original signal frequency bands, respectively based on the first and the second local frequencies in the same frequency but differentiated their phases by 90 degree each other, which are generated from the local oscillators from the received signals;
spectrum despreading codes output from the spread code generator and supplied to the first and the second spectrum despreaders are different but are synchronized with each other while maintaining the prescribed phase relationship in the time domain;
a delay locked loop for synchronizing the spread codes of the received signals with the spectrum despreading code synchronizes both codes based on one of two types of received signals which are converted to the original signal frequency band according to the first and the second local frequencys;
extracts the phase information from the restored original signals which are restored by executing the spectrum despreading of the two types of the received signals based on the first and the second local frequencys by supplying the spectrum despreading codes to the first and the second spectrum despreaders; and
controls the restored original signals so that their phases are kept unchanged by changing the local frequency frequency generated from the local oscillator by controlling the local oscillator based on the extracted phase information.

7. A spread spectrum communications receiver characterized in that it is equipped with a first and a second spectrum despreaders to receive signals which are processed the spread spectrum modulation and converted to a higher frequency, and based on first and second local frequencies generated from the local oscillators in the same frequency and different phases which are shifted by !k each other, converts the received signals to the original signal frequency band, respectively and to execute the spectrum despreading;
further equipped with two sets of the delay locked loop for synchronizing the spread codes of the received signals with a spectrum despreading codes output from a spread code generator for the spectrum despreading;
synchronizes the spread codes of the received signals with the spectrum despreading codes for the two types of received signals which are converted to the original signal frequency band;
by supplying the synchronized spectrum despreading codes to the first and the second spectrum despreaders for the spectrum despreading, the phase information is extracted from the original signals restored by the spectrum despreading of two types of the received signals which are converted to the original signal frequency band based on the first and the second local frequencys; and
the restored original signals are controlled so that their phases are kept unchanged by changing the frequency of the local frequencys generated from the local oscillator while controlling the local oscillator based on the extracted phase information.

8. A spread spectrum communications receiver characterized in that in a spread spectrum communications receiver to receive signals which are carried out the spread spectrum modulation and converted to a higher frequency band, a local oscillator is commonly used for changing the frequency of the received signals to the original signal frequency band and for executing the spectrum despreading.
